Europäisches Patentamt

European Patent Office

Office européen des brevets

(11) Numéro de publication: **0 221 219**
**A1**

## (12) DEMANDE DE BREVET EUROPEEN

(21) Numéro de dépôt: 85402101.1

(22) Date de dépôt: 31.10.85

(51) Int. Cl.⁴: **C05F 7/00**

(43) Date de publication de la demande:
13.05.87 Bulletin 87/20

(84) Etats contractants désignés:
AT BE CH DE FR GB IT LI LU NL SE

(71) Demandeur: **Biez, Georges**
**La Perrière**
**F-74580 Viry(FR)**

(72) Inventeur: **Biez, Georges**
**La Perrière**
**F-74580 Viry(FR)**

(74) Mandataire: **Gillard, Marie-Louise et al**
**Cabinet Beau de Loménie 55, Rue**
**d'Amsterdam**
**F-75008 Paris(FR)**

(54) **Amendement biologique pour l'agriculture, préparé à partir de boues résiduaires de stations d'épuration et son procédé de fabrication.**

(57) La présente invention a pour objet un amendement biologique pour l'agriculture et son procédé de fabrication. Ledit amendement biologique est obtenu par fermentation aérobie d'une biomasse, résultant de l'ensemencement par une sélection de bactéries lyophilisées d'un mélange contenant :

-de 40 à 70 % en poids d'extraits secs de boues d'épuration,

-de 25 à 50 % en poids d'un support carboné,

-de 5 à 15 % en poids de carbonate de calcium,

-de 5 à 20 % en poids de phosphate naturel,

-de 5 à 15 % en poids de plâtre de construction, et

-de 2 à 10 % en poids de fécule d'amidon de maïs.

EP 0 221 219 A1

## Amendement biologique pour l'agriculture, préparé à partir de boues résiduaires de stations d'épuration et son procédé de fabrication.

La présente invention a pour objet un amendement biologique pour l'agriculture, préparé à partir de boues résiduaires de stations d'épuration. Le procédé de fabrication dudit amendement constitue un autre objet de la présente invention.

L'élaboration du produit selon l'invention permet la valorisation des résidus de stations d'épuration. Depuis une trentaine d'années, de nombreuses stations d'épuration ont été construites et produisent des boues, riches en matières organiques et minérales.

Lesdites boues constituent à priori une matière de choix pour l'agriculture. Toutefois, elles ne sont que très peu employées et rejetées généralement en décharge publique. Leur conditionnement, leur transport occasionnent des frais trop élevés.

Selon l'invention, on réalise tout d'abord une concentration de ces boues. A des extraits secs de celles-ci, on incorpore divers éléments et notamment une sélection bactérienne. Après fermentation d'une quinzaine de jours, on obtient un amendement de très grande valeur.

Ledit amendement selon l'invention est constitué de matières naturelles. Il permet l'apport dans les sols, notamment ceux appauvris par l'emploi d'engrais de synthèse en grande quantité, de substances stimulantes et de bactéries ammonisantes et nitrifiantes, efficaces et virulentes.

L'amendement biologique selon l'invention est caractérisé en ce qu'il est obtenu par fermentation aérobie d'une biomasse, résultant de l'ensemencement par une sélection de bactéries lyophilisées, d'un mélange contenant :
- de 40 à 70% en poids d'extraits secs de boues d'épuration,
- de 25 à 50 % en poids d'un support carboné,
- de 5 à 15 % en poids de carbonate de calcium,
- de 5 à 20 % en poids de phosphate naturel,
- de 5 à 15 % en poids de plâtre de construction, et
- de 2 à 10 % en poids de fécule d'amidon de maïs.

Il convient, selon la présente invention, de réaliser un assemblage de matières nutritives pour les bactéries et les plantes, notamment un assemblage de boues, de supports carbonés et de fécule d'amidon de maïs qui permet le foisonnement de certaines bactéries, dans des conditions optimales. Il convient de réaliser une biomasse très poreuse, qui respire, sans créer de foyer de méthanisation par manque d'oxygène. Ladite biomasse renferme également des substances minérales, nécessaires au développement des plantes. Les bactéries produisent également de telles substances à partir des boues, au cours de la fermentation.

L'amendement selon l'invention est donc réalisé à partir d'un mélange contenant les différents ingrédients énumérés ci-dessus. Les proportions dans lesquelles interviennent lesdits ingrédients varient en fonction de l'utilisation ultérieure de l'amendement. Les plages indiquées ont été déterminées pour conduire à un amendement de très grande valeur, en un délai et dans des conditions raisonnables. Ledit amendement est notamment caractérisé par un très faible rapport : volume/ poids, environ 10 m³ aux 8 tonnes. A l'intérieur desdites plages, l'homme de l'art est à même de fixer la concentration de tel ou tel composant, selon qu'il destine l'amendement à la culture maraîchère, à celle d'agrumes, à la pousse d'un gazon, ...

L'amendement selon l'invention est réalisé en grande partie à partir d'extraits secs de boues de stations d'épuration. Lesdites boues contiennent généralement environ 85 % d'eau. Pour l'obtention d'extraits secs, elles sont préalablement défloculées puis séchées, par exemple dans des fours ou par atomisation.

Le mélange à partir duquel est élaboré l'amendement selon l'invention contient d'autres matières nutritives pour les bactéries : un support carboné, de la fécule d'amidon de maïs.

Le support carboné utilisé peut notamment être choisi parmi de la sciure de bois, du foin broyé, des branches d'arbres séchées et broyées, des fibres de papier, de la paille broyée ou des mélanges desdits éléments.

Les matières minérales introduites dans le mélange sont :
- du carbonate de calcium
- un phosphate naturel
- du plâtre de construction.

Il s'agit de minerais riches.

Le carbonate de calcium doit être riche en CaO , en contenir environ 10 % en poids.

Le phosphate naturel employé sera également un minerai riche.

La Demanderesse emploie avantageusement un phosphate naturel, en provenance du Sénégal, qui contient environ :
- 9,8 % en poids de carbonate de calcium ($CaCO_3$),
- 5,5 % en poids de chaux vive (CaO),
- 0,3 % en poids d'oxyde de magnésium (MgO),
- 0,007 % en poids de fer (Fe),
- 0,13 % en poids d'alumine ($Al_2O_3$).

Le plâtre (semi-hydrate de sulfate de calcium) peut contenir des traces de fer.

Ledit mélange doit également contenir des oligo-éléments. Ceux-ci sont apportés par les différents constituants du mélange et notamment les extraits secs des boues d'épuration.

Toutefois, si cela s'avère nécessaire, il conviendra d'en rajouter des traces au mélange.

Pour obtenir l'amendement selon l'invention, à partir dudit mélange, on doit procéder à son ensemencement et à la fermentation de la biomasse ainsi obtenue.

Avant ledit ensemencement, le mélange est humidifié jusqu'à ce qu'il contienne environ 30 % d'humidité. Dans un tel mélange humidifié, on introduit une sélection de bactéries lyophilisées. On incorpore environ de 50 à 250 grammes desdites bactéries sur leur support de lyophilisation pour 1 000 kg du mélange humidifié.

La sélection desdites bactéries est établie en fonction de leur complémentarité.

Il convient que ladite sélection contienne des bactéries de souche Thermo en association avec d'autres bactéries, les souches Thermo permettant une montée très rapide de la biomasse en phase thermophile.

Lesdites autres bactéries sont choisies pour leur action complémentaire, présente sur la biomasse et future dans les sols. Il s'agit de bactéries ammonisantes, nitrifiantes, qui sont également susceptibles de débarrasser les boues des substances pathogènes qu'elles contiennent éventuellement.

De préférence, on utilise des azobacters, des amylobacters, le Bacillus Radici-cola ou leurs mélanges.

Ainsi, comme culture microbienne susceptible d'absorber et de fixer l'azote, il est fait usage par exemple de cultures d'azobacters. On prépare lesdites cultures en laboratoire suivant une technique bactériologique connue, en partant de terre arable.

De la même façon, peuvent intervenir des cultures de Bacillus Radici-cola, préparées selon la même technique, mais à partir de nodosités de racines de luzerne ou de pois.

De même, il peut être fait usage de culture d'amylobacters, de bactéries cellulosiques, de microbes d'humidification comme les Hyphomycètes... Toutes ces souches sont bien connues de l'homme de l'art. En ce qui concerne les souches de Bacillus Radici-cola et Thermo, on peut notamment les obtenir auprès du "Irish International Biochemical Group" à Dublin.

La fermentation du mélange humidifié ensemencé est réalisée en phase aérobie.

Lorsque l'on estime que la transformation de la biomasse est suffisamment avancée, que la biomasse obtenu est suffisamment riche en bactéries, on procède à son conditionnement. Celui-ci a généralement lieu au bout de 12 à 15 jours.

Ledit conditionnement est à optimiser en fonction notamment de l'utilisation qu'il sera faite de l'amendement selon l'invention.

On transforme généralement la biomasse obtenu en granulés. Ce conditionnement permet d'assurer ensuite une bonne répartition de l'amendement selon l'invention dans les sols.

Lesdits granulés sont réalisés par passage de la biomasse dans une presse à granuler. Les bactéries actives, soumises à la pression requise pour un tel conditionnement, se mettent en sommeil.

Il est impératif que la biomasse, après son conditionnement renferme un nombre suffisant d'individus actifs, pour que, lorsqu'elle sera distribuée dans les sols, ces derniers puissent continuer leur travail et en même temps assurer un allègement desdits sols.

On retrouve ensuite dans les sols amendés les traces des bactéries les plus efficaces. Elles agissent notamment autour des semences et des racines.

L'action de l'amendement biologique selon l'invention s'opère de trois manières:

1) en fournissant à la semence et aux racines des substances organiques stimulantes qui accélèrent la respiration et l'accroissement des tissus de la plante, rendant celle-ci plus robuste et plus active.
De ce fait, la plante devient capable de mieux se nourrir et de mieux résister à toutes les intempéries des saisons, de donner des produits de qualité supérieure, et en plus grande quantité.
Les récoltes obtenues par ce traitement surpassent le maximum atteint à ce jour par l'emploi du fumier et d'engrais chimiques.

2) en fournissant encore au sol une virulente charge de bactéries parmi les plus capables connues à ce jour afin de réaliser la nitrification et la putréfaction : bactéries qui travaillent autour des semences et des racines.

3) en fournissant en outre au sol des substances qui attirent les bactéries autour des semences et des racines, stimulant l'activité des microbes fixateurs d'azote ainsi que des microbes ammonisants et nitrifiants qui existaient déjà dans le sol.

Un autre objet de la présente invention concerne le procédé de fabrication de l'amendement selon l'invention.

Il consiste à réaliser dans une première étape un mélange comportant :

-de 40 à 70 % en poids d'extraits secs de boues d'épuration,

-de 25 à 50 % en poids d'un support carboné,

-de 5 à 15 % en poids de carbonate de calcium,

-de 5 à 20 % en poids de phosphate naturel,

-de 5 à 15 % en poids de plâtre de construction, et

-de 2 à 10 % en poids de fécule d'amidon de maïs.

Selon une variante dudit procédé, on peut réaliser un premier mélange avec des boues défloculées, par exemple par passage au travers de pompes défloculantes, et le support carboné. L'étape de séchage partiel ou total est alors mise en oeuvre sur ce premier mélange auquel on ajoute ensuite les autres ingrédients minéraux et organiques.

On ajoute dans une seconde étape audit mélange la quantité d'eau nécessaire pour porter son taux d'humidité à environ 30 % en poids.

Le mélange humidifié est malaxé ; on utilise de préférence un mélangeur lent, type mélangeur à ruban.

On réalise ensuite la phase d'ensemencement. De préférence, celle-ci consiste en un arrosage du mélange par une solution contenant les bactéries lyophilisées. Par exemple, lesdites bactéries sur leur support de lyophilisation auront été dissoutes en agitation rapide dans un litre d'eau à 33°C. Il est possible d'effectuer l'ensemencement en plusieurs fois, en plusieurs arrosages successifs.

La biomasse ainsi constituée, grâce à l'intervention des bactéries Thermo, se met en phase mésophile, puis en phase thermophile. Il convient que cette deuxième phase (environ 50°C) soit atteinte assez rapidement, en environ 48 heures, pour éviter le développement de bactéries pathogènes.

On doit d'autre part veiller à une bonne oxygénation de la biomasse. Lorsque la température de celle-ci descend en-dessous de 37°C, et avant qu'elle ait atteint 33°C, on doit assurer une oxygénation de ladite biomasse, qui se trouve alors en phase mésophile. Cette oxygénation peut être réalisée de différentes façons. On peut oxygéner ladite biomasse par introduction en son sein de sondes d'air. L'air insufflé ne devra en aucun cas être à une température en-dessous de 33°C.

On pourra également oxygéner ladite biomasse de façon plus simple, en la remuant vivement, dans l'air ambiant, dont la température ne doit pas être inférieure à 33°C.

Il est en général nécessaire de répéter les phases d'oxygénation environ toutes les 26 heures.

Le cycle d'oxydation de la biomasse n'a pas besoin d'excéder 15 jours. Ladite biomasse est généralement prête à l'emploi après 12 à 15 jours, elle renferme alors un nombre suffisant de bactéries actives et la dégradation des boues résiduaires est suffisamment avancée.

La biomasse obtenue est alors conditionnée. La phase de conditionnement anesthésie généralement les bactéries. On pourra notamment conditionner ladite biomasse sous forme de granulés ou de poudre, par lyophilisation ou tout simplement par compression.

Une pression de l'ordre de 600 à 900 bars intervient dans la presse à granuler. Comme indiqué précédemment, à la suite de ce conditionnement, les bactéries sont mises en sommeil.

Lorsque les granulés se retrouvent en terre, ils se délitent et les bactéries reprennent alors leur travail de nitrification et de putréfaction.

A titre d'illustration, on propose ci-dessous un exemple de réalisation d'un amendement selon l'invention. Ledit exemple n'est nullement limitatif.

Un amendement biologique pour l'agriculture est obtenu par fermentation aérobie d'une biomasse, résultant de l'ensemencement par une sélection de bactéries lyophilisées d'un mélange contenant en poids :

-50 % d'extraits secs de boues d'épuration,

-30 % de paille broyée,

-6 % de carbonate de calcium,

-6 % de phosphate naturel,

-6 % de plâtre de construction, et

-2 % de fécule d'amidon de maïs.

On a incorporé à ces ingrédients mélangés intimement 27 % d'humidité puis 200 grammes de bactéries pour 1 000 kg dudit mélange.

## Revendications

1. Amendement biologique pour l'agriculture, caractérisé en ce qu'il est obtenu par fermentation aérobie d'une biomasse, résultant de l'ensemencement par une sélection de bactéries lyophilisées d'un mélange contenant :

-de 40 à 70 % en poids d'extraits secs de boues d'épuration,

-de 25 à 50 % en poids d'un support carboné,

-de 5 à 15 % en poids de carbonate de calcium,

-de 5 à 20 % en poids de phosphate naturel,

-de 5 à 15 % en poids de plâtre de construction, et

-de 2 à 10 % en poids de fécule d'amidon de maïs.

2. Amendement selon la revendication 1, caractérisé en ce que, avant son ensemencement, le mélange doit contenir environ 30 % en poids d'humidité.

3. Amendement selon l'une des revendications 1 ou 2, caractérisé en ce que la sélection bactérienne contient des bactéries de souche Thermo.

4. Amendement selon la revendication 3, caractérisé en ce que la sélection bactérienne contient d'autres bactéries choisies parmi les azobacters, les amylobacters, le Bacillus Radici-cola ou leurs mélanges.

5. Amendement selon l'une quelconque des revendications précédentes, caractérisé en ce que les bactéries sont introduites sur leur support de lyophilisation à raison d'environ 50 à 250 grammes pour 1 000 kg du mélange humidifié.

6. Amendement selon l'une quelconque des revendications précédentes, caractérisé en ce que le support carboné est choisi parmi de la sciure de bois, du foin broyé, des branches d'arbre séchées et broyées, des fibres de papier, de la paille broyée ou des mélanges desdits éléments.

7. Amendement selon l'une quelconque des revendications précédentes, caractérisé en ce qu'il se présente sous la forme de granulés.

8. Procédé pour la fabrication d'un amendement selon l'une quelconque des revendications précédentes, caractérisé en ce qu'il consiste :
-à réaliser un mélange à partir de 40 à 70 % en poids d'extraits secs de boues d'épuration, de 25 à 50 % en poids d'un support carboné, de 5 à 15 % en poids de carbonate de calcium, de 5 à 20 % en poids de phosphate naturel, de 5 à 15 % en poids de plâtre de construction et de 2 à 10 % en poids de fécule d'amidon de maïs ;
-à humidifier ledit mélange jusqu'à ce qu'il contienne environ 30 % en poids d'humidité ;
-à ensemencer celui-ci avec une sélection de bactéries lyophilisées et à laisser fermenter, sous oxygénation suffisante, la biomasse ainsi obtenue ;
-à conditionner le produit résultant, notamment sous la forme de granulés.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A- 488 858 (C.S. TOWNSEND) <br> * Page 1, lignes 32-38; page 3, lignes 21-89 * | 1,3,5-8 | C 05 F 7/00 |
| Y | GB-A- 535 059 (CELEC CORP. LTD.) <br> * Page 2, lignes 78-115 * | 1,3,5-8 | |
| A | US-A-3 847 803 (PLINY FISK) <br> * Colonne 8, lignes 12-62; colonne 11, lignes 5-29 * | 1,3,4 | |
| A | EP-A-0 112 996 (IPLA) <br> * Page 8, lignes 5-10 * | 1,3,4 | |
| A | FR-A-2 260 550 (H. NEBIKER) | | DOMAINES TECHNIQUES RECHERCHES (Int. Cl.4) <br><br> C 05 F |

Le présent rapport de recherche a été établi pour toutes les revendications

| Lieu de la recherche <br> LA HAYE | Date d'achèvement de la recherche <br> 11-07-1986 | Examinateur <br> VERHOEST J.P.M. |
|---|---|---|